(19) **Europäisches Patentamt**

**European Patent Office**

**Office européen des brevets**

(11) Veröffentlichungsnummer : **0 299 282 B1**

(12) # EUROPÄISCHE PATENTSCHRIFT

(45) Veröffentlichungstag der Patentschrift :
29.05.91 Patentblatt 91/22

(21) Anmeldenummer : 88110407.9

(22) Anmeldetag : 29.06.88

(51) Int. Cl.⁵ : **F16L 3/20, G01M 19/00, G01N 3/00**

(54) Verfahren und Einrichtung zur Funktionsüberprüfung einer Hängevorrichtung für eine Last.

(30) Priorität : 14.07.87 DE 3723242

(43) Veröffentlichungstag der Anmeldung :
18.01.89 Patentblatt 89/03

(45) Bekanntmachung des Hinweises auf die
Patenterteilung :
29.05.91 Patentblatt 91/22

(84) Benannte Vertragsstaaten :
BE CH DE ES FR LI NL SE

(56) Entgegenhaltungen :
EP-A- 0 027 381

(56) Entgegenhaltungen :
US-A- 3 102 706
US-A- 4 131 010
US-A- 4 157 033
US-A- 4 550 589

(73) Patentinhaber : Siemens Aktiengesellschaft
Wittelsbacherplatz 2
W-8000 München 2 (DE)

(72) Erfinder : Pospischil, Werner
Heinrich-von-Kleist-Strasse 5
W-6074 Rödermark (DE)
Erfinder : Hartwig, Günter, Dipl.-Ing.
Landwehr 12
W-6450 Hanau 1 (DE)

EP 0 299 282 B1

Jouve, 18, rue Saint-Denis, 75001 PARIS

## Beschreibung

Die Erfindung betrifft ein Verfahren zur Funktionsüberprüfung einer mit mindestens einer mechanischen Feder ausgerüsteten Hängevorrichtung für eine Last, insbesondere eines Federhängers oder eines Konstanthängers zum Halten einer Rohrleitung an einer Gebäudestruktur.

Federhänger und Konstanthänger sind allgemein bekannt, beispielsweise aus der US-A-3 102 706. Der dort gezeigte Federhänger weist zumindest eine mechanische Feder auf und kann dazu dienen, Rohrleitungen an Gebäudestrukturen zu befestigen. Durch die in den bekannten Hängevorrichtungen eingesetzten mechanischen Federn werden Schwingungen der Rohrleitungen gedämpft. Federhänger und Konstanthänger zum Befestigen von Rohrleitungen an Gebäudestrukturen sind beispielsweise in Kraftwerksanlagen eingesetzt.

Nach langer Betriebszeit ist eine Verschlechterung der Dämpfungseigenschaften der bekannten Hängevorrichtungen möglich. Daher ist es notwendig, in bestimmten zeitlichen Abständen die eingesetzten Hängevorrichtungen zu überprüfen.

Bisher ist es üblich, die zu überprüfenden Hängevorrichtungen zur Überprüfung auszubauen. Die Funktionsüberprüfung erfolgt auf einem dazu bestimmten Prüfstand. Aus der US-A-4 157 033 ist ein solcher stationärer Prüfstand bekannt. Er dient dazu, mechanische Federn einzeln einer Funktionsüberprüfung zu unterziehen. Bei der großen Zahl der beispielsweise in einem Kraftwerk vorhandenen Hängevorrichtungen, die zu überprüfen sind, verursachen das Ausbauen, der Transport zum Prüfstand, das Prüfen, der Rücktransport und das Einbauen einen erheblichen Zeit- und Kostenaufwand.

Der Erfindung lag die Aufgabe zugrunde, ein Verfahren zur Funktionsüberprüfung der genannten Hängevorrichtungen zu entwickeln, das ohne Demontage der zu prüfenden Einrichtung auskommt und daher bei hoher Zuverlässigkeit sehr schnell und kostengünstig durchführbar ist.

Die Aufgabe wird gemäß der Erfindung dadurch gelöst, daß die Last von der Hängevorrichtung gelöst und durch andere Vorrichtungen gehalten wird, daß mit der zu überprüfenden Hängevorrichtung anstelle der Last zum Komprimieren oder Dehnen der Feder der Hängevorrichtung dann eine Hydraulikvorrichtung verbunden wird, die mit einem Druckaufnehmer und einem Schreiber verbunden ist, mit denen der zum Komprimieren oder Dehnen der Feder notwendige Druck und damit die Federkonstante der Feder über den Betriebsweg der Feder ermittelt und registriert wird.

Durch die Hydraulikvorrichtung wird die Feder wie durch eine angehängte Last komprimiert oder gedehnt. Das Komprimieren oder die Dehnung erfolgt schrittweise über den gesamten Betriebsweg der Feder, der beispielsweise 60 mm lang ist. Nach jedem Komprimier- oder Dehnungsschritt, beispielsweise in Abständen von 10 mm, wird der zum Komprimieren oder Dehnen der Feder momentan in der Hydraulikvorrichtung benötigte Druck durch einen Druckaufnehmer gemessen, der mit der Hydraulikvorrichtung verbunden ist. Ein Schreiber in Verbindung mit einer Auswerteeinheit bestimmt aus den gemessenen Werten den Verlauf der Federkonstante der Feder über den Betriebsweg und registriert diesen Verlauf.

Die Federkonstante entspricht derjenigen Kraft auf eine Feder, die notwendig ist, um die Feder um eine bestimmte Wegstrecke zu komprimieren oder zu dehnen. Gemäß der Erfindung wird die Kraft aus dem gemessenen Druck in der Hydraulikvorrichtung bestimmt. Die genaue momentane Komprimierung oder Dehnung der Feder ergibt sich aus der Stellung des beweglichen Teiles der Hydraulikvorrichtung zu am Gehäuse der Hydraulikvorrichtung angebrachten Meßpunkten.

Mit der Erfindung wird der Vorteil erzielt, daß Hängevorrichtungen, insbesondere Federhänger und Konstanthänger ohne Demontage an ihrem Einsatzort auf Funktionsfähigkeit zu überprüfen sind. Wenn eine sehr große Anzahl derartiger Hängevorrichtungen überprüft werden soll, die beispielsweise in einer Kraftwerksanlage zum Halten von Rohrleitungen verwendet werden, dann ist das mit dem erfindungsgemäßen Verfahren besonders schnell und kostengünstig durchführbar. Das Verfahren nach der Erfindung eignet sich besonders zur Funktionsüberprüfung der die Rohrleitungen haltenden Federhänger und Konstanthänger in Kernkraftwerken. Sehr viele Hängevorrichtungen sind schnell und zuverlässig zu überprüfen.

Eine Einrichtung zur Durchführung des Verfahrens gemäß der Erfindung sieht eine Hydraulikvorrichtung vor, die mehrere Meßpunkte aufweist und mit einem Druckaufnehmer und einem Schreiber verbunden ist. Beispielsweise steht die Hydraulikvorrichtung mit einer Hydraulikpumpe in Verbindung. In der Hydraulikvorrichtung ist ein Kolben angeordnet, der mit der Feder der Hängevorrichtung in Verbindung zu bringen ist. Dieser Kolben wird durch das Medium der Hydraulikvorrichtung beaufschlagt und wird dadurch verschoben. Folglich wird die Feder komprimiert oder gedehnt. Da die Verbindung zwischen dem Kolben und der Feder starr ist, entspricht der an Meßpunkten ablesbare Verschiebungsweg des Kolbens dem Komprimierungs- oder Dehnungsweg der Feder. Wenn der Kolben einen Meßpunkt erreicht hat, wird der Druck im Kolben durch den Druckaufnehmer bestimmt. Daraus läßt sich zusammen mit dem Komprimierungs- oder Dehnungsweg die Federkonstante der Feder in der Hängevorrichtung bestimmen. Falls die Feder-konstante gegenüber ihrem ursprünglichen Wert unverändert ist, ist die Hängevorrichtung zuverlässig funktionsfähig.

Mit der geschilderten Einrichtung gemäß der Erfindung wird der Vorteil erzielt, daß Hängevorrichtungen ohne Demontage zu überprüfen sind.

Mit der Erfindung wird insbesondere eine schnelle und zugleich zuverlässige Funktionsüberprüfung ermöglicht.

Eine Einrichtung zur Durchführung des erfindungsgemäßen Verfahrens sieht beispielsweise vor, daß mit der zu überprüfenden Hängevorrichtung an deren Gehäuse abgestützt eine Spannvorrichtung in Verbindung steht. In der Spannvorrichtung ist das Gehäuse eines Hydraulikzylinders gehalten, der zur Funktionsüberprüfung der Hängevorrichtung mit einer Vorrichtung zum Halten einer Last in Verbindung steht, die Teil der Hängevorrichtung ist. Zwischen dieser Vorrichtung zum Halten einer Last und dem Hydraulikzylinder ist ein Kraftaufnehmer angeordnet, der mit einer Auswerteeinheit elektrisch verbunden ist. Mit der Spannvorrichtung verbunden ist ein Wegaufnehmer angeordnet, der auch mit der Vorrichtung zum Halten einer Last in Verbindung steht und durch den der Verschiebungsweg meßbar ist. Auch der Wegaufnehmer ist mit der Auswerteeinheit elektrisch verbunden.

Die geschilderte Einrichtung eignet sich besonders gut zur Durchführung des erfindungsgemäßen Verfahrens.

Beispielsweise ist zwischen dem Gehäuse der zu überprüfenden Hängevorrichtung und der Spannvorrichtung eine Adapterkegelscheibe angeordnet. Dadurch sind unterschiedliche Gehäusedurchmesser der Hängevorrichtung und der Spannvorrichtung ausgleichbar. Zur mechanischen Verbindung der Vorrichtung zum Halten einer Last mit dem Hydraulikzylinder ist beispielsweise eine Gewindemuffe vorgesehen. Dadurch ist durch Austausch nur der Gewindemuffe die erfindungsgemäße Einrichtung zur Durchführung des Prüfverfahrens an unterschiedlich ausgerüsteten Hängevorrichtungen einsetzbar.

Bei der erfindungsgemäßen Prüfung einer Hängevorrichtung wird wie folgt vorgegangen :

Nach Entfernen der Last wird über passende Gewindemuffen eine Verbindung zwischen Hydraulikzylinder und der Hängevorrichtung hergestellt. Der Hydraulikzylinder stützt sich über die Spannvorrichtung, die zwischen Hydraulikzylinder und Gehäuse der Hängevorrichtung montiert ist, am Gehäuse der Hängevorrichtung ab. Dabei werden unterschiedliche Durchmesser der Gehäuse mit einer Adapterkegelscheibe ausgeglichen, die zwischen Gehäuse der Hängevorrichtung und Gehäuse der Spannvorrichtung gelegt wird. Nach der Montage wird der Wegaufnehmer angeschlossen. Dieser ist fest auf der Spannvorrichtung installiert. Zwischen dem Hydraulikzylinder und der Gewindemuffe ist ein Kraftaufnehmer angeordnet. Vor Beginn der Messung wird die Auswerteeinheit, die mit Meßverstärkern verbunden ist, kalibriert. Anschließend wird die Federkennlinie der mechanischen Feder der Hängevorrichtung ermittelt. Dazu wird mit dem Hydraulikzylinder die Feder gedehnt oder komprimiert, während Meßwerte des Kraftmessers und des Wegaufnehmers ausgewertet werden.

Mit dem erfindungsgemäßen Verfahren und der Einrichtung zur Durchführung dieses Verfahrens wird der Vorteil erzielt, daß ein Abweichen der Federkonstante von der Sollvorgabe schnell und zuverlässig zu bestimmen ist. Darüber hinaus kann die Kaltlast und die Warmlast der Feder ermittelt und daraufhin eingestellt werden.

Mit dem erfindungsgemäßen Verfahren und der Einrichtung wird ermöglicht, daß Abnormalitäten der Federkennlinie, z.B. bei der Hysterese, zu erkennen sind, die bei sehr hoher Beanspruchung, beispielsweise bei einem Erdbeben mit großen dynamischen Wegen, eine Beeinträchtigung der Funktion der Hängevorrichtung zur Folge hätten.

Die Erfindung wird anhand der Zeichnung näher erläutert :

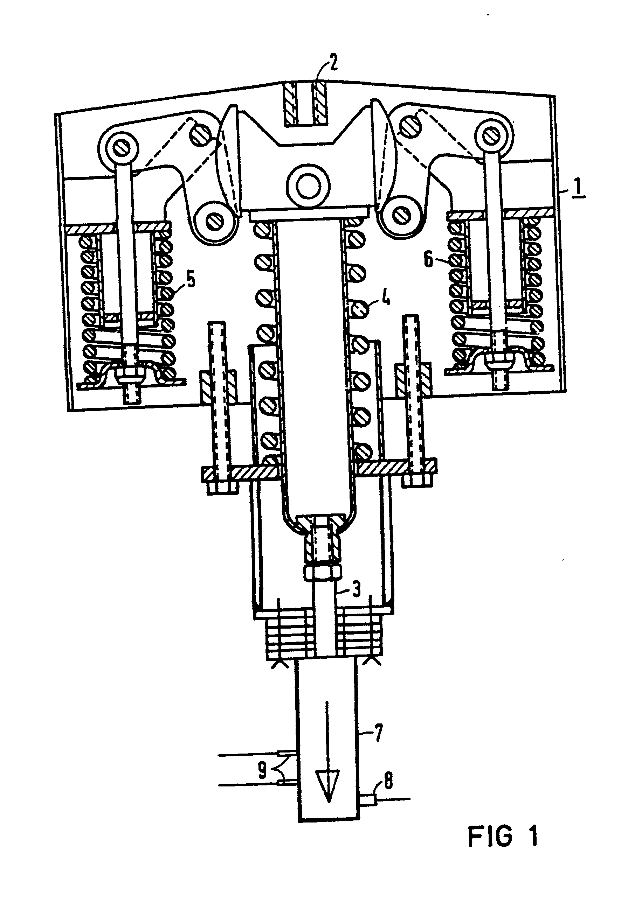

FIG 1 zeigt einen Konstanthänger, mit dem anstelle eines Rohres eine Einrichtung zur Durchführung des erfindungsgemäßen Verfahrens verbunden ist.

FIG 2 zeigt detailliert eine Hängevorrichtung, mit der eine Einrichtung zur Durchführung des erfindungsgemäßen Verfahrens verbunden ist.

Ein Konstanthänger 1 weist eine Vorrichtung 2 zum Befestigen an einer Gebäudestruktur und eine weitere Vorrichtung 3 auf, an der in der Regel eine Rohrleitung gehalten wird. Im Konstanthänger 1 befinden sich mechanische Federn 4, 5 und 6 Die äußeren Federn 5 und 6 stehen jeweils mit der inneren Feder 4 in Verbindung. Die Vorrichtung 3 zum Halten einer Rohrleitung ist mit der mittleren Feder 4 verbunden. Zur Funktionsüberprüfung des Konstanthängers 1 ist die Vorrichtung 3 zum Halten einer Rohrleitung statt mit einer Rohrleitung mit einem Hydraulikzylinder 7 verbunden. Dieser als solcher bekannte Hydraulikzylinder 7 weist einen Anschluß 8 für eine Hydraulikpumpe und Anschlüsse 9 für Druckaufnehmer auf. Im Hydraulikzylinder 7 befindet sich ein nicht dargestellter Kolben, der durch das eingespeiste Medium bewegt wird und mit der Vorrichtung 3 des Konstanthängers 1 verbunden ist. Durch eine Bewegung des Kolbens werden die Federn 4 bis 6 komprimiert. Der Verschiebungsweg ist an nicht dargestellten Markierungen am Hydraulikzylinder 7 ablesbar. Der Druck im Hydraulikzylinder 7 und damit die Kraft auf die Vorrichtung 3 des Konstanthängers 1 wird durch Druckaufnehmer ermittelt. Aus den ermittelten Werten ist die Federkonstante ableitbar, deren momentaner Wert einen Hinweis auf die Funktionsfähigkeit des Konstanthängers 1 gibt.

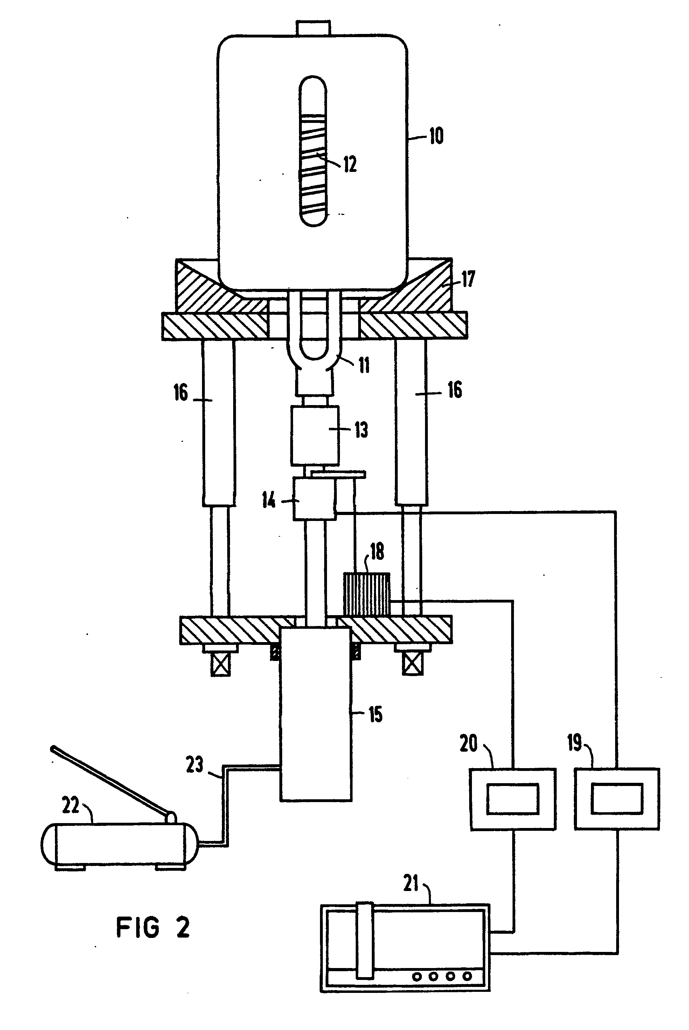

Eine Hängevorrichtung 10 nach FIG 2 ist ein Federhänger, der eine Vorrichtung 11 zum Halten einer Rohrleitung aufweist. In der Hängevorrichtung 10 befindet sich eine Feder 12. Zur Funktionsüberprüfung der Hängevorrichtung 10 ist die Vorrichtung 11 zum Halten einer Rohrleitung statt mit einer Rohrleitung über eine Gewindemuffe 13 und einen Kraftaufnehmer 14 mit einem Hydraulikzylinder 15 verbunden. Der Hydraulikzylinder 15 ist im Gehäuse einer Spannvorrichtung 16 gehalten. Die Spannvorrichtung 16 ist über eine Adapterkegelscheibe 17 am Gehäuse der Hängevorrichtung 10 abgestützt. Auf der Spannvorrichtung 16 ist ein Wegaufnehmer 18 angeordnet, der mit der Vorrichtung 11 zum Halten einer Last in Verbindung steht. Der Wegaufnehmer 18 ist dazu zwischen der Gewindemuffe 13 und dem Kraftaufnehmer 14 angeschlossen. Der Kraftaufnehmer 14 und der Wegaufnehmer 18 stehen über Meßverstärker 19 und 20 mit einer Auswerteeinheit 21 in Verbindung. Mit dem Hydraulikzylinder 15 ist eine Hydraulikpumpe 22 über einen Hydraulikschlauch 23 verbunden.

## Ansprüche

1. Verfahren zur Funktionsüberprüfung einer mit mindestens einer mechanischen Feder (4, 12) ausgerüsteten Hängevorrichtung (1, 10) für eine Last, insbesondere eines Federhängers oder eines Konstanthängers (1) zum Halten einer Rohrleitung an einer Gebäudestruktur, **dadurch gekennzeichnet**, daß die Last von der Hängevorrichtung (1, 10) gelöst und durch andere Vorrichtungen gehalten wird, daß mit der zu überprüfenden Hängevorrichtung anstelle der Last zum Komprimieren oder Dehnen der Feder (4, 5, 6, 12) der Hängevorrichtung (1, 10) dann eine Hydraulikvorrichtung (7, 15) verbunden wird, die mit einem Druckaufnehmer und einem Schreiber verbunden ist, mit denen der zum Komprimieren oder Dehnen der Feder (4, 12) notwendige Druck und damit die Federkonstante der Feder (4, 12) über den Betriebsweg der Feder (4, 12) ermittelt und registriert wird.

2. Einrichtung zur Durchführung des Verfahrens nach Anspruch 1, **gekennzeichnet durch** eine Hydraulikvorrichtung (7, 15), die mit der zu überprüfenden Hängevorrichtung (1, 10) an einer zum Aufnehmen der Last vorgesehenen Vorrichtung verbindbar ist zum Beaufschlagen der Hängevorrichtung (1, 10) mit einer Kraft zum Komprimieren oder Dehnen der Feder (4, 5, 6, 12) der Hängevorrichtung (1, 10) und wobei die Einrichtung einen Druckaufnehmer und einen Schreiber zum Bestimmen und Registrieren der Federkonstante der Feder (4, 5, 6, 12) der Hänge vorrichtung (1, 10) aufweist.

3. Einrichtung nach Anspruch 2, **dadurch gekennzeichnet**, daß die Hydraulikvorrichtung (7, 15) mit einer Hydraulikpumpe (22) verbunden ist.

4. Einrichtung nach Anspruch 2, **dadurch gekennzeichnet**, daß mit der zu überprüfenden Hängevorrichtung (10) an deren Gehäuse abgestützt eine Spannvorrichtung (16) in Verbindung steht, daß in der Spannvorrichtung (16) das Gehäuse eines Hydraulikzylinders (15) gehalten ist, der mit einer Vorrichtung (11) zum Halten einer Last durch die Hängevorrichtung (10) in Verbindung steht, daß zwischen der Vorrichtung (11) zum Halten einer Last und dem Hydraulikzylinder (15) ein Kraftaufnehmer (14) angeordnet ist, der mit einer Auswerteeinheit (21) elektrisch verbunden ist und daß mit der Spannvorrichtung (16) verbunden ein Wegaufnehmer (18) angeordnet ist, der mit der Vorrichtung (11) zum Halten einer Last in Verbindung steht und mit der Auswerteeinheit (21) elektrisch verbunden ist.

5. Einrichtung nach Anspruch 4, **dadurch gekennzeichnet**, daß zwischen dem Gehäuse der zu überprüfenden Hängevorrichtung (10) und der Spannvorrichtung (16) eine Adapterkegelscheibe (17) angeordnet ist.

6. Einrichtung nach Anspruch 4, **dadurch gekennzeichnet**, daß zur mechanischen Verbindung zwischen der Vorrichtung (11) zum Halten einer Last und dem Hydraulikzylinder (15) eine Gewindemuffe (13) angeordnet ist.

## Claims

1. Method for functional testing of a suspension arrangement (1, 10), which is fitted with at least one mechanical spring (4, 12), for a load, in particular a spring hanger or a constant hanger (1) for holding a pipe line on a building structure, characterised in that the load is released from the suspension arrangement (1, 10) and held by means of other arrangements, in that a hydraulic arrangement (7, 15) is then connected with the suspension arrangement to be tested, instead of the load, for the purpose of compressing or stretching the spring (4, 5, 6, 12) of the suspension arrangement (1, 10), which hydraulic arrangement (7, 15) is connected with a pressure sensor

and a recorder with which the pressure necessary to compress or stretch the spring (4, 12) and thus the spring constant of the spring (4, 12) over the operating path of the spring (4, 12) are established and registered.

2. Device for carrying out the method according to claim 1, characterised by a hydraulic arrangement (7, 15), which can be connected with the suspension arrangement (1, 10) to be tested at an arrangement provided for taking up the load, for the purpose of applying a force to the suspension arrangement (1, 10) for the purpose of compressing or stretching the spring (4, 5, 6, 12) of the suspension arrangement (1, 10), and with the device having a pressure sensor and a recorder for determining and registering the spring constant of the spring (4, 5, 6, 12) of the suspension arrangement (1, 10).

3. Device according to claim 2, characterised in that the hydraulic arrangement (7, 15) is connected with a hydraulic pump (22).

4. Device according to claim 2, characterised in that a stressing arrangement (16) is located in connection with the suspension arrangement (10) to be tested, stayed on the housing of the latter, in that there is held in the stressing arrangement (16) the housing of a hydraulic cylinder (15) which communicates with an arrangement (11) for holding a load by means of the suspension arrangement (10), in that there is arranged between the arrangement (11) for holding a load and the hydraulic cylinder (15) a force sensor (14) which is electrically connected with an evaluating unit (21) and in that arranged connected with the stressing arrangement (16) there is a travel sensor (18) which communicates with the arrangement (11) for holding a load and is electrically connected with the evaluating unit (21).

5. Device according to claim 4, characterised in that a conical adaptor washer (17) is arranged between the housing of the suspension arrangement (10) to be tested and the stressing arrangement (16).

6. Device according to claim 4, characterised in that for the purposes of mechanical connection a threaded sleeve (13) is arranged between the arrangement (11) for holding a load and the hydraulic cylinder (15).


## Revendications

1. Procédé pour contrôler le fonctionnement d'un dispositif de suspension de charge (1, 10), équipé au moins d'un ressort mécanique (4, 12), notamment un dispositif de suspension à ressort ou un dispositif de suspension à effet constant (1) servant à retenir une conduite tubulaire à la structure d'un bâtiment, caractérisé par le fait qu'on détache la charge du dispositif de suspension (1, 10) et qu'on la maintient par d'autres dispositifs, qu'on raccorde alors au dispositif de suspension à contrôler, à la place de la charge pour comprimer ou allonger le ressort (4, 5, 6, 12) du dispositif de suspension (1, 10), un dispositif hydraulique (7, 15), qu'on raccorde un capteur de pression et un enregistreur, à l'aide desquels on détermine et on enregistre la pression nécessaire pour comprimer ou allonger le ressort (4, 12) et par conséquent la constante d'élasticité de ce ressort (4, 12), sur la course de service du ressort (4, 12).

2. Dispositif pour la mise en oeuvre du procédé suivant la revendication 1, caractérisé par un dispositif hydraulique (7, 15), qui peut être raccordé au dispositif de suspens ion (1, 10) à contrôler, au niveau d'un dispositif prévu pour recevoir la charge, de manière à charger le dispositif de suspension (1, 10) par une charge servant à comprimer ou allonger le ressort (4, 5, 6, 12) du dispositif de suspension (1, 10), le dispositif pour la mise en oeuvre du procédé comportant un capteur de pression et un enregistreur permettant de déterminer et d'enregistrer la constante d'élasticité du ressort (4, 5,6, 12) du dispositif de suspension (1, 10).

3. Dispositif suivant la revendication 2, caractérisé par le fait que le dispositif hydraulique (7, 15) est raccordé à une pompe hydraulique (22).

4. Dispositif suivant la revendication 2, caractérisé par le fait qu'au dispositif de suspension (10) à contrôler est raccordé un dispositif de serrage (16), qui prend appui sur le carter du dispositif de suspension, que le carter d'un vérin hydraulique (15), raccordé à un dispositif (11) servant à retenir une charge au moyen du dispositif de suspension (10) est retenu dans le dispositif de serrage (16), qu'entre le dispositif (11) servant à retenir une charge et le vérin hydraulique (15) est disposé un transducteur de force (14), raccordé électriquement à une unité d'évaluation (21), et qu'il est prévu un capteur de déplacement (18), qui est raccordé au dispositif de serrage (16) et au dispositif (11) servant à retenir une charge et est relié électriquement à l'unité d'évaluation (21).

5. Dispositif suivant la revendication 4, caractérisé par le fait qu'un disque conique formant adaptateur (17) est disposé entre les carters du dispositif de suspension (10) à contrôler et du dispositif de serrage (16).

6. Dispositif suivant la revendication 4, caractérisé par le fait qu'il est prévu un manchon fileté (13) pour réaliser la liaison mécanique entre le dispositif (11) servant à retenir une charge et le vérin hydraulique (15).

FIG 1

FIG 2